Europäisches Patentamt

European Patent Office

Office européen des brevets

(11) Publication number: **0 484 701 A1**

# EUROPEAN PATENT APPLICATION

(21) Application number: **91117578.4**

(22) Date of filing: **15.10.91**

(51) Int. Cl.5: **F16L 55/26**, E21B 4/18

(30) Priority: **19.10.90 JP 279455/90**
**19.10.90 JP 279456/90**
**19.10.90 JP 279457/90**

(43) Date of publication of application:
**13.05.92 Bulletin 92/20**

(84) Designated Contracting States:
**CH DE FR GB IT LI**

(71) Applicant: **LOOPER-ROBOT SYSTEMS CO., LTD**
**15-1 Udagawa-cho, Shibuya-Ku**
**Tokyo 150(JP)**

(72) Inventor: **Moritaka, Munetoshi**
**1-6D-30, 2-chome Sengen**
**Tsukuba City(JP)**

(74) Representative: **Graf, Walter, Dipl.-Ing.**
**Sckellstrasse 1**
**W-8000 München 80(DE)**

(54) **Apparatus capable of moving in a tube, method of moving in a tube, and support mechanism.**

(57) A method and apparatus for moving a creeper through a pipe or tube is shown and described. At least two support members (10,20) are moved alternately along the length of the pipe by means of a computer control. The supports alternately support the apparatus, and each support may have two or more support arms (50a,50b) which are computer controlled.

EP 0 484 701 A1

## Field of the Invention

The present invention relates to an apparatus which is capable of moving in a tube and particularly to an apparatus or a creeper comprising a pair of support members capable of alternatively supporting the apparatus on inner surface of the tube while the other support member is moving away from or toward the one.

The present invention further relates to a method of moving in a tube an apparatus or a creeper comprising a pair of support members capable of alternatively supporting the apparatus on inner surface of the tube while the other support member is moving away from or toward the one.

The present invention also relates to an apparatus having a pair of support members capable of alternatively holding the apparatus against the tube wall and the one moving toward or away from the other, and particularly to the mechanism for achieving a synchronous motion of arms.

## Background of the Invention

Few apparatus have been heretofore known which are capable of creeping in a tube. In one example of such known apparatus, a creeper has been proposed which has a plurality of creeping members having wheels, one connected to another creeping member with a flexible tube. (Science Magazine MOL, vol. 296, Dec. 1, 61st of Showa published by Ohm Publ. Co.). The creeper comprises a pair of leading cars, four drive cars, a gear car, a motor car, a connector car, four drive cars, a gear car, a motor car, a connector car, a sensor car, and a connector car. In other words, the proposed creeper requires 8 drive cars and 9 support cars in order to send a sensor car into a tube thus proposing a tube inside moving apparatus consisting of a train of cars totaling 18.

Further development of the proposed creeper has not been reported. Taking the fact into account that as many as two sets of 4 drive cars are required, it is apparent that the creeper has the problem of lack of traction force.

Namely it is difficult to keep the wheels under the body therefore the body weight is not necessarily regarded as wheel load. Secondly, in case of providing biasing wheels on the opposite side of the drive wheels, means must be provided to be used for a tube of ununiform diameter. Generally speaking, there are many problems to be solved in order to drive a vehicle in a tube against sediments or scales on inner surface of the tube.

## Summary of the Invention

The present invention aims at providing a means for moving forward as well as backward an apparatus into a bent tube or a straight tube having ununiform diameter which is capable of performing works on the inner wall of the tube with some extent of reaction force, such as cleaning operation.

The present invention provides a means for moving an apparatus forward as well as backward into a bent tube or a straight tube having ununiform diameter which is capable of performing works on the inner wall of the tube with some extent of reaction force, such as cleaning operation.

The present invention aims at providing a support mechanism for an apparatus which is capable of moving in a tube as proposed hereinabove.

The present invention relates an apparatus having a pair of support members capable of alternatively supporting the apparatus against the tube wall while either of the support member is moving toward or away from the other member.

In case that at least three arms which are capable of extending and retracting in the radial direction by means of air pistons to grasp the tube wall from inside, and that an air piston mechanism is employed between the support members to realize expansion or contraction motion of the member, the motion of the apparatus can be controlled by a sequencer of known type using 5-port electromagnetic valves.

Another feature of the present apparatus consists in that an attachment can be mounted on the spindle by providing a hole or stay on the spindle to perform an inspection or operation on the inner surface of the tube wall.

This invention enables driving into a tube an apparatus in the manner that while one of the support members supports the apparatus against tube wall, the other support member moves forward or backward and next while the latter supports the apparatus, the former moves forward or backward; thus repeating this cycle, the apparatus moves forward or backward.

The apparatus of the present invention further provides a reliable motion due to the fact that either of the support members stretches arms against the tube wall instead of friction force of drive wheels.

With the use of larger cylinder or higher pressure, it further provides a sufficient support for a tube cleaning operation which exerts a larger force on the tube inner surface.

For steel tubes or earthenware tubes for water supply or drainage, air can be used as pressure medium without causing any troubles in the pipelines or water contamination, thus providing easier maintenance and simpler structure.

The creeper of the present invention is characterized in that it is comprised of a pair of support members capable of alternatively supporting the apparatus against the tube wall while one is moving toward or away from the other member.

The present invention further aims at providing a means for tube inspection or working on the wall from inside by using step-by-step movement.

The means of the invention enables driving into a tube an apparatus in the manner that while one of the support members supports the apparatus against tube wall, the other support member moves forward or backward and next while the latter supports the apparatus, the former moves forward or backward.

The apparatus of the present invention further provides a reliable motion due to the fact that either of the support members stretches arms against the tube wall instead of friction force of drive wheels.

Further, with the use of larger cylinder or higher pressure, it provides a sufficient support for tube cleaning operation which exerts a large force on the tube wall surface.

For water supply tubes or drain tubes, air can be used as pressure medium without causing any troubles in the pipelines or water contamination, thus providing easier maintenance and simple structure.

The present invention relates to a support mechanism for a tube-creeping apparatus, i.e. an apparatus having a support member slidably mounted on a spindle; another support member fixed on said spindle, said two support members being capable of alternatively holding the apparatus against the tube wall by means of at least three arms while one of the support members moves toward or away from the other support members, said upport mechanism being comprised of a rotary member rotatably mounted on said spindle, a plurality of link members pivoted at one end to the periphery of said rotary member and the other end pivoted at said arm in order to translate the extension or contraction of said arms into a rotary motion of said rotary member identical to the distance of motion of all the arms.

By means of the support mechanism, the distance of extension or contraction of three arms measured from the center of the spindle is always kept identical.

Because each of the three arms rotates a common rotary member by a link, the distance of expansion and contraction of each arms corresponds to the angular position of the rotary member, i.e. any of three arms is not allowed to extend or contract by a distance different with other arms, all of the arms extend or contract by equal distance measured from the center of the spindle because the rotary member is coaxially mounted on the spindle.

The support mechanism is capable of always positioning the spindle equidistant from the points of contact of arms on the inner surface notwithstanding uneven inner surfaces caused by scales or sediments and the main spindle, provided with the support mechanism at both ends, is allowed to position itself at the center of the tube.

The present support mechanism is capable of positioning the main spindle coaxial with not only a straight tube, but also with a bent tube.

Since the minimum radius of bent tube through which the creeper can pass depends on the maximum distance between front support member and rear support member, and the minimum length of the arms of the support members, the creeper is easy to be adapted to any bent tube having various radius of curvature.

An embodiment of the present invention is hereinafter described with reference to the drawings. However, the dimensions, materials, shapes or relative structure of the embodiment is not limitative but illustrative as long as no limitative remarks are made.

## Brief Description of the Drawings

Fig. 1 shows a schematic structure of the tube inside creeper according to the invention.

Fig. 2(A) shows a front view of an embodiment of the invention in which some portion is shown in cross-section.

Fig. 2(B) shows a rear side view.

Fig. 2(C) shows a front side view.

Fig. 2(D) shows a cross-sectional view along the line A-A of Fig. 2(A).

Fig. 3 shows a flow chart of the embodiment of the invention.

## Detailed Description of the Preferred Embodiment

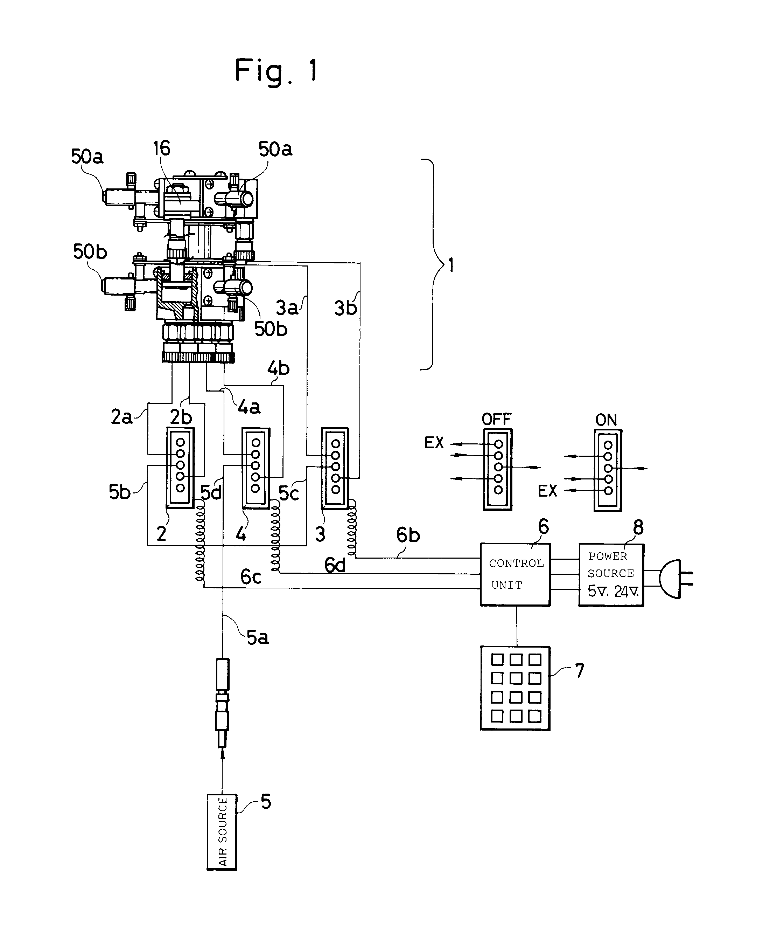

Fig. 1 shows a schematic structure of the embodiment of the whole creeper system of present invention.

In the figure, the numeral 1 denotes a tube creeper, numeral 2 denotes control valve for extending/contracting arms, which is in the form of 5-port electromagnetic valve for controlling pressure air to extend/contract arms of front and rear support member, the numerals 3 and 4 denote the control valve for front set of arms and rear set of arms respectively, each being in the form of 5-port electromagnetic valve for extending/contracting front set of arms 50a or rear set of arms 50b.

Pressure air is supplied from a source 5 to the valves 2, 3 and 4 via hoses 5b, 5c, and 5d branched from the hose 5a.

The valves 2, 3, 4 are energized by electric currents via cables 6b, 6c, 6d controlled by the controller 6 and control panel 7. These valves admit air into the hoses 2a, 3a, 4a when they are energized; on the other hand, they admit air into the hoses 2b, 3b, 4b when they are deenergized. The other ends of the hoses 2a, 3a, 4a as well as 2b, 3b, 4b are connected to the creeper 1 in order to give the creeper a desired motion by pressure air.

When voltage is given, the hoses 2a, 3a, 4a associate with the air source 5, admitting air into one of the bores to activate the piston. The air in the other chamber is exhausted via hoses 2b, 3b, 4b through the valves 2, 3, 4. This state lasts until the valves are deenergized. The reversed valve position lasts until the valves are reenergized. When the tube creeper moves into a tube, it is accompanied by the following members; i.e. the valves 2, 3, 4 and hoses 2a, 3a, 4a as well as 2b, 3b, 4b and the hose 5a connected to the valves 2, 3, 4 and to the source 5 and cables 6b, 6c, 6d. In other words, the pressure air source 5, controller 6 and control panel 7 as well as power source are left out of the tube to control and assist the creeper.

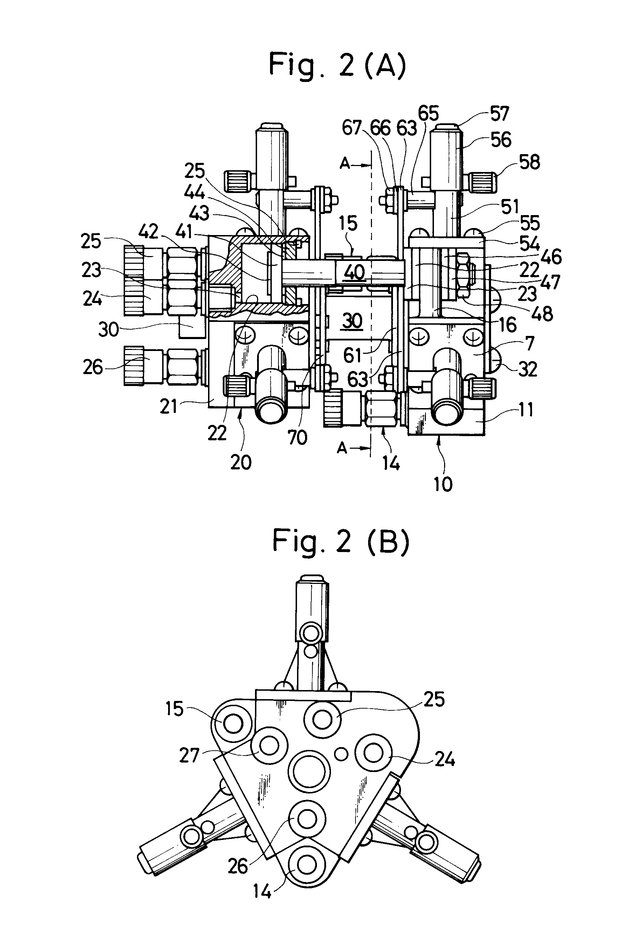

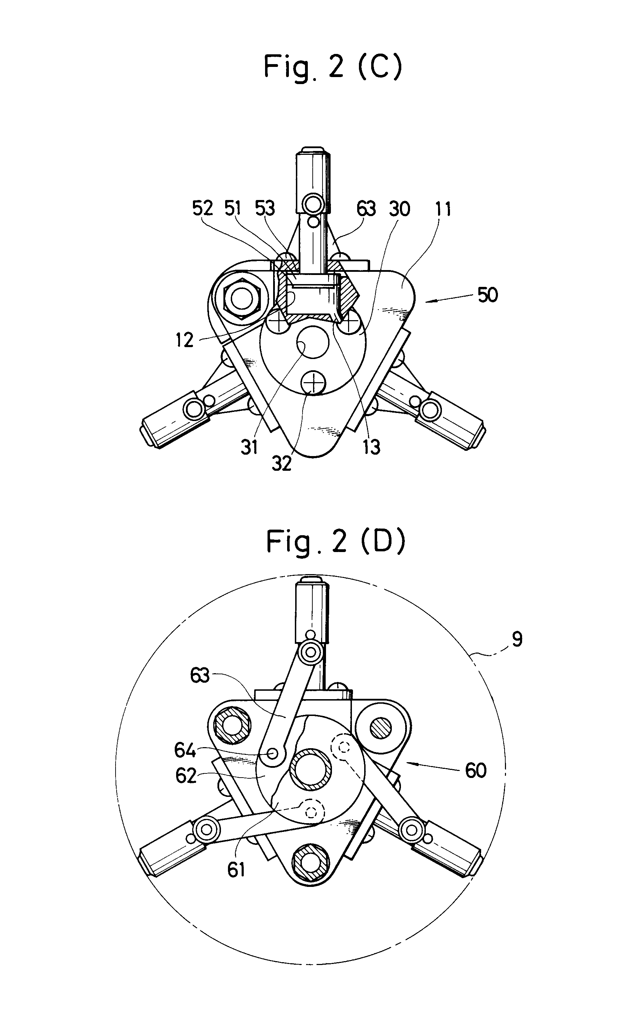

Fig. 2 shows a front view (a), a rear view (b), a side elevation (c), and a cross-section (d) along the line A-A as viewed from the rear side of the tube creeper.

The structure of the creeper 1 is described with reference to the Fig. 2(a). The numeral 10 denotes a front support member 20, a rear support member, and 30 denotes main spindle connecting the front support member 10 and rear support member 20, one end of which is secured to the front support member 10 with a plurality of threads. The numeral 40 denotes a piston-cylinder mechanism for extending/retracting front support member and rear support member; i.e. the rear base member 21 is provided with a piston bore 12 in which is slidably received an extension/retraction piston 41, said bore having an air-tight structure with a cover 44 and a ring 45. The piston 41 has damper rings 42, 43 at both sides, and the other end of the piston rod is secured to a stay 16 of front base 11 by means of two sets of elastomer washers 46, 47 and a nut 48.

The extension/retraction piston bore 12 communicates on one side with a tube coupling 24 for extension through an extension passage provided at one end of the bore, and on the other hand with a contraction coupling 25 through a contraction passage (not shown) (Fig. 2(b)).

Taking the front arm mechanism as example, an arm mechanism 50 will be described with reference to Fig. 2(c). The numeral 51 denotes an arm piston; 52 and 53 denote an elastomeric damper ring; 56 denotes an adapter having a rubber member 57 which is secured to the other end of the piston rod by means of a screw 58; said piston rod being slidably retained on the base 11 by means of a bore cover 54 and threads 55. The front base 11 is provided with a bore for slidably receiving the arm piston 51; the bore communicates, on the one hand, with front arm extension coupling 14 via an extension passage 13, on the other hand, with contraction coupling 15 via a contraction passage (not shown).

According to the embodiment, the other two arm mechanisms 50a are provided on the front base 11. The rear base 21 is provided with three rear arm mechanisms 50b, similar to the front arm mechanism, each piston bore communicating with rear arm extension and rear arm contraction coupling 26, 27.

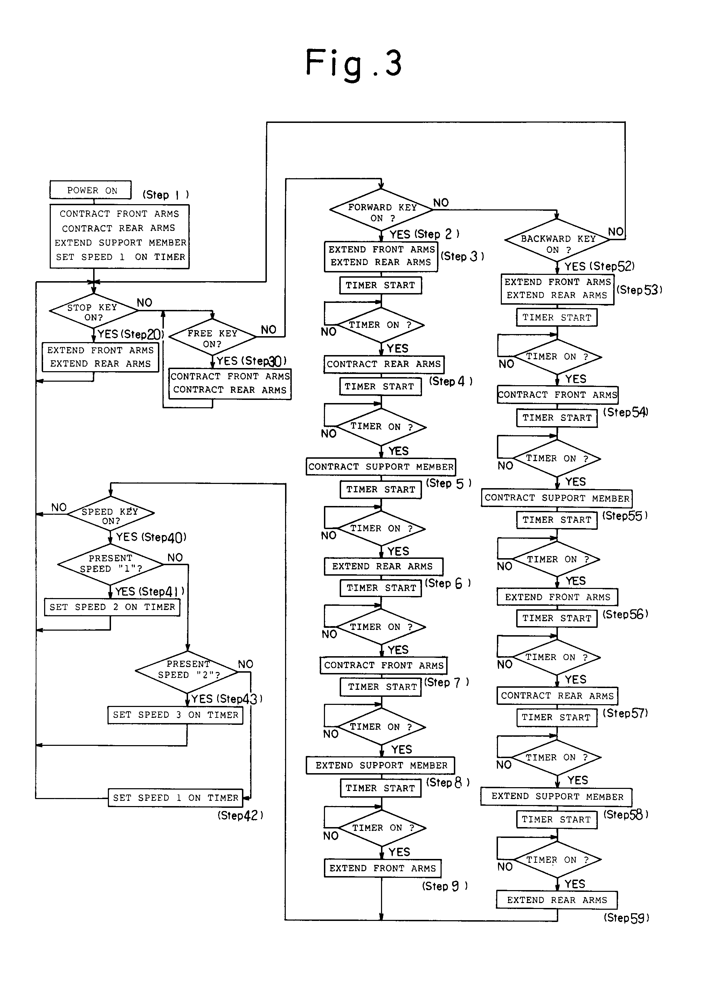

Furthermore, the creeper is capable of moving in a tube by actuating extension/contraction piston 40 which extends or contracts the front support member 10 and rear support member, and arm extension/contraction mechanism (front arm 50a and rear arm 50b) (see Fig. 3).

In operation, each 5-port electromagnetic valve is set in its initial position for bringing extension/contraction piston 41 in its extended position, and front arm mechanism 50a, rear arm mechanism 50b, i.e. 6 arm pistons, in their contracted position (step 1). Then insert the creeper into the tube. Forward movement is selected on the control panel to start the following cycles according to the program in the control unit 6 (step 2). The front arm 50a, as well as the rear arm 50b are extended to see if the arm length is suited for the inner diameter of the tube (replace the adapter 56 if necessary; step 3). Rear arms 50a are contracted (step 4). Extension/contraction piston 40 is contracted (the rear support member 2 is moved toward the front support member 10; step 5). Extend the rear arm 50b (step 6). Contract the front arms 50a (step 7). Extend extension/contraction piston 40 (move forward the front support member 10 by the stroke length; step 8). Extend the front arms 50a (step 9), (the last step (step 9) is the same as step 3). Step 4 through step 9 are performed in a cycle until the stop order (step 20) is given through control panel 7, realizing step-by-step motion in step 8.

At the start of every step, a timer is started to regulate the speed of movement; the speed is given in the steps 40 through 43; predetermined speed (speed 1 to 3) is selected taking into consideration the reliability of the action of the creeper and the productivity.

The above explanation is given in relation with the forward movement, but the backward movement can be achieved in the same manner; the cycle is given in the steps 52 through 59.

The control unit 6 which gives orders and decides the motion cycles given on the control panel 7 can be in the form of a sequencer of conventional type; for example HD6303XP as CPU,27C64 as memory, TA8000S as reset or other IC can be used. As the language for the program based on the flow chart shown in Fig. 3, the assembler can be used.

A pair of rotary members 61, 62 are rotatably mounted on the spindle 30, these members having three pivots 64 at their periphery, and three links 63 pivoted at 64 between the rotary members 61, 62 (Fig. 2(d)).

On the other hand, the arm piston 51 has an axial protuberance 65 extending toward the rotary member 61, 62 at the point remote from the bore cover of the distance equal to the piston stroke, and the end of the link 63 is pivotally secured at its end by means of washer 66 and nut 67 (Fig. 2(a)). Other arm pistons 51 have similar link mechanisms, thus axial protuberance 65 on each arm piston and link 63, piston 64, nut 67, and a pair of rotary members 61, 62 constitute a link mechanism for the front support member 10.

The link mechanism for the rear support member 20 is contructed in the same manner.

The link mechanism permits three arm pistons 51 to extend or retract in synchronism, i.e. extending or retracting the same distance from the main spindle 30 depending on the angle of rotation of the rotary members 61, 62.

The synchronized extension of the arms is assured not only for straight tubes but also for bent tubes. Since the minimum radius of a bent tube through which the creeper can pass depends on the maximum distance between the front arms and the rear arms, and the minimum length of front or rear arms, proper creeper should be chosen considering these factors.

The creeper is easy to be adapted for tubes of different diameter by using suitable adapter 56.

Furthermore, the creeper is capable of moving in a tube by actuating extension/contraction piston 40 which extend or contract the front support member 10 and rear support member, and arm extension/contraction mechanism (front arm 50a and rear arm 50b) (see Fig. 3).

In operation, each 5-port electromagnetic valve is set in its initial position for bringing extension/contraction piston 41 in its extended position, and front arm mechanism 50a, rear arm mechanism 50b, i.e. 6 arm pistons, in their contracted position (step 1). Then insert the creeper into the tube. Forward movement is selected on the control panel to start the following cycles according to the program in the control unit 6 (step 2). The front arm 50a, as well as the rear arms 50b are extended to see if the arm length is suited for the inner diameter of the tube (replace the adapter 56 if necessary; step 3). Rear arms 50a are contracted (step 4). Extension/contraction piston 40 is contracted (the rear support member 20 is moved toward the front support member 10; step 5).

Extend the front arms 50a (step 9). Since the last step (step 9) is the same as step 3, steps 4 through 9 are performed in a cycle until the stop order (step 20) is given through control panel 7, realizing step-by-step motion in step 8.

Extend the rear arm 50b (step 6). Contract the front arms 50a (step 7). Extend extension/contraction piston 40 (move forward the front support member 10 by the stroke length, step 8). Extend the front arms 50a (step 9). Since the last step (step 9) is the same as step 3. Step 4 through step 9 are performed in a cycle until the stop order (step 20) is given through control panel 7, realizing step-by-step motion in step 8.

At the start of every step, a timer is started to regulate the speed of movement; the speed is given in the steps 40 through 43; predetermined speed (speed 1 to 3) is selected taking into consideration the reliability of the action of the creeper and the productivity.

The above explanation is given in relation with the forward movement, but the backward movement can be achieved in the same manner; the cycle is given in the steps 52 through 59.

If the control panel 7 is provided with keys for forward motion, backward motion, advance, stop, forward speed change, backward speed change, test mode, free mode, the flow-chart in Fig. 3 can be changed or modified on the control panel.

With reference to Fig. 2(d), another feature of the invention will be described.

A pair of rotary members 61, 62 are rotatably mounted on the spindle 30, these members having three pivots 64 at their periphery, and three links 63 pivoted at 64 between the rotary members 61, 62 (Fig. 2(d)).

On the other hand, the arm piston 51 has an axial protuberance 65 extending toward the rotary members 61, 62 at the point remote from the bore cover of the distance equal to the piston stroke, and the end of the link 63 is pivotally secured at its end by means of washer 66 and nut 67 (Fig. 2(a)).

Other arm pistons 51 have similar link mechanisms, thus axial protuberance 65 on each arm piston and link 63, piston 64, nut 67, and a pair of rotary members 61, 62 constitute a link mechanism for the front support member 10.

The link mechanism for the rear support member 20 is constructed in the same manner.

According to the present embodiment, three arm pistons 51 extend or retract by the same distance from the main spindle 30 depending on the angle of rotation of the rotary members 61, 62.

Further, the support mechanism is capable of positioning the main spindle of the apparatus coaxial with a straight tube as well as with a bent tube. Since the minimum radius of a bent tube through which the apparatus 1 can pass depends on the largest distance between the front arms and the rear arms, and the length of arms at their contracted position, suitable apparatus should be selected.

Further, the apparatus is easy to be adapted for any bent tube by choosing adaptors 56 having suitable dimensions.

If the creeper has a stay at its periphery or a hole 31 coaxial with the main shaft, it can be used mounting various attachments.

According to the embodiment above, the apparatus can move forward or backward in the manner that one (10) of the support members 10, 20, stretching its arms against tube wall, supports the whole apparatus while the other support member (20) moves forward or backward, then the latter takes turns to support the whole apparatus, while the former moves forward or backward, thus repeating the cycle.

The step-by-step motion of the apparatus is firm because, either of the arms 50a, 50b at any time grasps the inner surface of the tube.

In the tube cleaning operation in which forces are exerted on the inner surface of the tube, the present invention provides suitable stay which endures the reaction force by using a higher pressure or proper piston mechanism having larger cylinder bore.

Since the minimum radius of a bent tube through which the apparatus can pass depends on the largest distance between the front arms and the rear arms, and the length of arms at their contracted position, the apparatus is easy to be adapted for any bent tube by choosing adaptors having suitable dimensions.

Further, by means of various kinds of attachments mounted on the hole 31 coaxial with the spindle 30 of the creeper, method for various kinds of operations, such as tube inside inspection, tube inside cleaning, tube inside painting can be attained, and the advantages of the present invention can be realized.

As described above, the present invention provides an apparatus capable of moving with high reliability not only in a tube having ununiform diameter but also in a straight or bent tube.

As described above, the present invention provides a method for moving with high reliability in a tube having ununiform diameter as well as in a straight or bent tube.

Further, the present invention provides an apparatus for firmly driving an equipment for tube inside cleaning operation which brings about forces against tube wall.

For steel tubes or earthenware tubes for water supply or drainage, air can be used as pressure media without causing any hazardous effects on the pipeline or water, thus providing an apparatus with easier maintenance and simpler structure.

For water supply tubes or drainpipes, air can be used as pressure media without causing any hazardous effects on the pipeline or water, thus providing easier maintenance and simpler structure because of easy exhaustion of air.

Further, the present invention provides a method of creeping in any bent tubes merely choosing a creeper having proper dimensions.

As described above, the distance of expansion or contraction of each of three arms is kept always equal notwithstanding the change of inner diameter of the tube, not only for a straight tube but also for a bent tube.

The present invention further enables inspection or observation in a favorable position of tube inner wall with fibre cables installed in a passage provided in a main spindle.

The foregoing description of the specific embodiments will so fully reveal the general nature of the invention that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation.

**Claims**

1. An apparatus for moving in a tube comprising:
   a first support member slidably mounted on a main spindle;
   a second support member fixed on the main spindle; and wherein both support members are capable of holding the apparatus against the tube wall while the other support member is moving toward or away from the former support.

2. An apparatus as set forth in claim 1 further comprising an attachment for inspection of the tube inside attached to the main spindle.

3. An apparatus as set forth in claim 1 further comprising an attachment for performing an operation on the tube.

4. A method of moving a pair of support members in a tube comprising:

driving a support member mechanism which is capable of moving away from or toward one of said members; and supporting the other of said support members in a tube while said one moves away from or toward the other.

5. A method of moving in a tube as set forth in claim 4 further comprising the step of providing said support members with means for inspection of the tube.

6. A method of moving in a tube as set forth in claim 4 further comprising the step of providing said support members with means for performing an operation on the inner surface of the tube wall.

7. A support mechanism for an apparatus for moving in a tube, said apparatus having a pair of support members, one of said members supporting the apparatus against the inner surface of the tube while the other of said members moves away from or toward the one comprising:

a base member part of each of said support members provided with at least three arms which are extendable in the radial direction;

a rotary member rotatably mounted on a main spindle of the support members;

and, links connected at one end to the periphery of said rotary member and at the other end to said arms for translating linear motion of arms into a rotation of the rotary member;

and whereby a synchronous extension and contraction of the arms is performed.

EP 0 484 701 A1

# Fig. 1

# Fig. 2 (A)

# Fig. 2 (B)

# Fig. 2 (C)

# Fig. 2 (D)

# Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 829 894 (LEHR ET AL.)<br>* column 3, line 27 - column 4, line 10; figures 1,2 * | 1,4,6 | F16L55/26<br>E21B4/18 |
| A | DE-A-1 625 962 (CUNNINGHAM)<br><br>* page 4, line 13 - line 28 *<br>* page 8, line 7 - line 18; figures 1-5 * | 1,3,4,6,7 | |
| A | FR-A-2 638 813 (LEONARD)<br>* abstract; figures 1-3 * | 1 | |
| A | EP-A-0 145 266 (WILSON)<br>* claims 1,13 * | 1-3,5,6 | |

TECHNICAL FIELDS
SEARCHED (Int. Cl.5)

F16L
E21B
B08B

The present search report has been drawn up for all claims

| Place of search | Date of completion of the search | Examiner |
|---|---|---|
| THE HAGUE | 20 FEBRUARY 1992 | ANGIUS P. |